# EUROPEAN PATENT APPLICATION

(11) **EP 1 677 494 A1**
(43) Date of publication of application: **05.07.2006**
(21) Application number: 05028658.2
(22) Date of filing: 29.12.2005
(51) Int. Cl.: H04M 1/247, H04M 1/725, G06F 3/033

(54) **Method for using menu items of a mobile terminal dependent of its current state information**

(30) Priority: 31.12.2004 KR 2004118439
(71) Applicant: LG Electronics Inc., Yongdungpo-gu Seoul (KR)
(72) Inventor: Lim, Guk-Chan, Gyeonggi-Do (KR)
(74) Representative: Katérle, Axel

(57) **Abstract**

A menu display method for a mobile terminally, which includes logically operating a value of a first register indicating a current state of the mobile terminal and a value of a second register indicating a relevancy of a menu option available on the mobile terminal to the current state of the mobile terminal, and determining whether or not a selected menu is to be executed based on the logically operating step.

## Description

This application claims priority to Korean Application No. 10-2004-0118439 filed on December 31, 2004, the entire contents of which is incorporated by reference in its entirety.

### BACKGROUND OF THE INVENTION

### 1. Field of the Invention

The present invention relates to a menu display method for a mobile terminal, and more particularly, to a mobile terminal menu display method that displays a menu based a current state of the terminal.

### 2. Description of the Related Art

Currently, mobile communication terminals include a variety of functions, which can be accessed by the user through menu options. For example, the user can set or release a desired function (e.g., a silent or vibrate mode, etc.) using different menus provided on the mobile terminal.

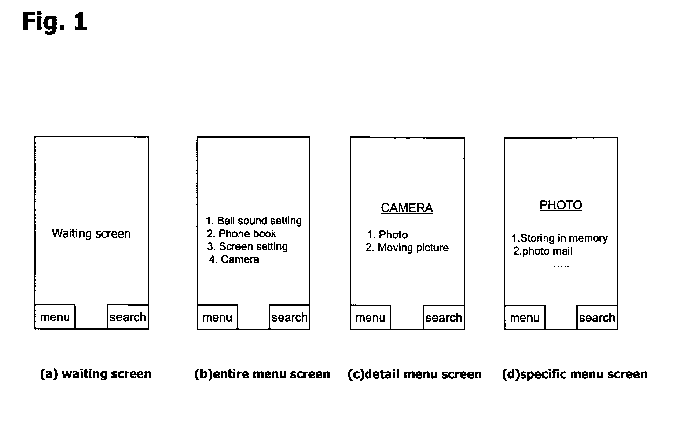

In more detail, FIG. 1 is an overview illustrating examples of different menus displayed on a mobile terminal. As shown, the menus are systemically constructed into groups of relevant menu items, such that the user sequentially selects a top level menu to reveal a more detailed menu listing and then may select a particular task from the detailed menu.

For example, as shown in FIG. 1, when a user first presses a menu button included in a keypad on the mobile terminal during an idle mode (a waiting screen mode in FIG. 1a), a top level menu including, for example, all available features of the mobile terminal, is displayed (FIG. 1b). Then, when the user selects one of the listed items such as the Camera function (item 4 in FIG 1b), a detailed menu corresponding to the camera function is displayed (FIG. 1 c). The user may then select a specific task from the detailed menu such as the Photo Task (item 1 in FIG 1 c). Upon selecting the photo task, more options related to the selected task are then displayed (FIG 1d). The user may then select the specific item listed in the menu to perform the desired function (e.g., storing photos in the memory of the terminal).

However, the related art mobile terminal menu display method has the following problems. First, the menu options are executed without taking into consideration a current state of the terminal. For example, if the memory of the mobile terminal is full or enough memory is not available, it is not possible to store the photos in the memory. However, in the related art, the menu options are still provided and executed based on the user's selection without consideration of the current state of the mobile terminal. Thus, when the user tries to execute a specific task, the user may receive an error message only after performing selection of the various menu options. This is very inconvenient for the user, especially when selection of a particular task may require navigating through several different menus.

### SUMMARY OF THE INVENTION

Accordingly, one object of the present invention is to address the above-noted and other objects.

Another object of the present invention is to provide a menu display method that takes into consideration a current state of the mobile terminal.

To achieve these and other advantages and in accordance with the purpose of the present invention, as embodied and broadly described herein, the present invention provides a menu display method for a mobile terminal, which includes logically operating a value of a first register indicating a current state of the mobile terminal and a value of a second register indicating a relevancy of a menu option available on the mobile terminal to the current state of the mobile terminal, and determining whether or not a selected menu is to be activated based on the logically operating step.

In accordance with another aspect, the present invention provides a computer program product on at least one recording medium for executing the following computer instructions: logically operating a value of a first register indicating a current state of the mobile terminal and a value of a second register indicating a relevancy of a menu option available on the mobile terminal to the current state of the mobile terminal, and determining whether or not a selected menu is to be executed based on the logically operating instructions.

In accordance with yet another aspect, the present invention provides a menu display method for a mobile terminal, which includes determining whether a selected menu is to be activated or not-activated based on current state information of the mobile terminal; and issuing an alert message and not activating the selected menu if the determining step determines the selected menu is not to be activated.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by illustration only, and thus are not limitative of the present invention, wherein:
FIGs. 1(a)-(d) are overviews illustrating various menus included in a mobile terminal in accordance with the related art;
FIG. 2 is an overview illustrating three-bit registers indicating a current state of a mobile terminal in accordance with an embodiment of the present invention;
FIG. 3 is an overview illustrating a three-bit register for different menu options in accordance with the present invention;
FIG. 4 is a flowchart illustrating a menu display method in accordance with an embodiment of the present invention; and
FIG. 5 is an overview illustrating a sequential logical operation between the registers shown in FIGs. 3 and 4 in accordance with an embodiment of the present invention.

### DETAILED DESCRIPTION OF THE PREFERRED EMBODIMENTS

Reference will now be made in detail to the preferred embodiments of the present invention, examples of which are illustrated in the accompanying drawings.

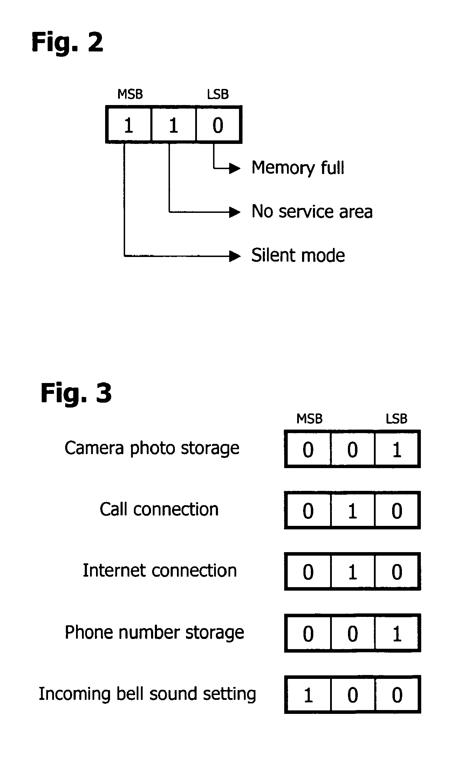

Turning first to FIGs. 2 and 3, which illustrate three-bit registers in accordance with an embodiment of the present invention. In more detail, FIG. 2 is a three-bit register representing a current state of the mobile terminal, and FIG. 3 includes three-bit registers representing a relationship between a mobile terminal function and a current state of the terminal. Further, as shown, each bit is set as a "0" or "1" to indicate information about that particular bit field.

Thus, with reference to FIG. 2, the most significant bit (MSB) of the register (hereinafter, also referred to as the "first register") denotes a current state of a silent mode, the second bit denotes that the mobile terminal is in a no service area, and the least significant bit (LSB) denotes a current state of a memory of the terminal. For example, FIG. 2 illustrates the first register including the bits '110,' which means the mobile terminal is in a silent mode, the user is in a no service area, and the memory of the mobile terminal is not full.

FIG. 3 illustrates menu output definition registers (hereinafter, also referred to as the "second registers") defining how each menu option of the mobile terminal is related to the current state of the mobile terminal. That is, as shown in FIG. 3, the output definition registers includes registers for a camera photo storage menu, a call connection menu, an Internet connection menu, a phone number storage menu and an incoming bell sound setting menu. These are only examples of different menus, and any other menus may be provided. In the example in FIG. 3, the camera photo storage register includes the bits '001,' the call connection menu and the Internet connection registers include the bits '010,' the phone number storage register includes the bits '001,' and the incoming bell sound the register includes the bits '100.'

Thus, with reference to FIG. 3, it can be seen the camera photo storage register is relevant to the memory state field in the first register (i.e., because the LSB in the second register is set to "1"), the call connection and Internet connection registers are relevant to the no service area field in the first register, the phone number storage register is relevant to the memory full field in the first register and the incoming bell sound setting register is relevant to the silent mode field in the first register. That is, each value of the second registers for all output menus of the mobile terminal is defined according to a relativity with the current state information of the first register.

Further, the values set in the registers in FIG. 3 may be predefined in a memory area of the terminal and then loaded into the second register when the cell phone is turned on. The values may also be set or changed by the user. Further, FIG. 3 illustrates each of the registers only being related to one of the fields in FIG. 2. However, the registers in FIG. 3 may be related to more than one or all of the fields in FIG. 2.

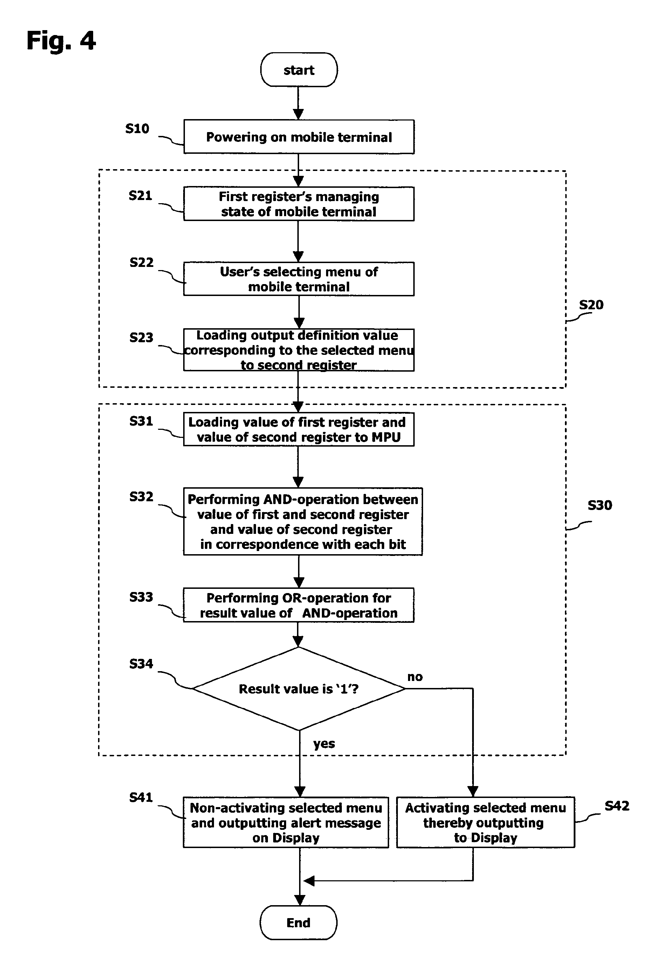

Turning now to FIG. 4, which is a flowchart showing an menu displaying method in accordance with an embodiment of the present invention. As shown, when the mobile terminal is turned on (S10), the appropriate values are loaded into the first and second registers (S20). In more detail, the mobile terminal manages the first register (S21) by determining the current state of the terminal, and appropriately updates the first register. For example, assuming the user has selected the silent mode, the first register would include a bit "1" in the corresponding field. Assuming also the user is a no service area and the memory of the terminal is currently not full, the first register would be updated to include the three-bit pattern '110.'

Then, if in this example, the user then selects the incoming bell sound menu among a plurality of available menus on the mobile terminal (assuming he or she forget they previously set the ringer to a silent mode) (S22), the output definition value of the selected menu is loaded into the second register via a processor unit such as a microprocessor (MPU) (S23). Note, it is also possible all values are loaded into the second register when the terminal is first powered on. Further, in step S30, the mobile terminal determines if the selected menu should be executed or activated based on the values loaded into the first and second registers.

In more detail, the corresponding values of the first and second registers are read by the processing unit (S31), and the processing unit then performs an AND-operation between the loaded values of the first and second registers. That is, in the above example, the bit pattern '110' in the first registers and the bit pattern '100' in the second register corresponding to the incoming bell sound setting menu are AND-ed together (S32). Thus, step S32 is used to determine whether or not a user selected menu (e.g., the incoming bell sound menu) is relevant to a current state of the mobile terminal.

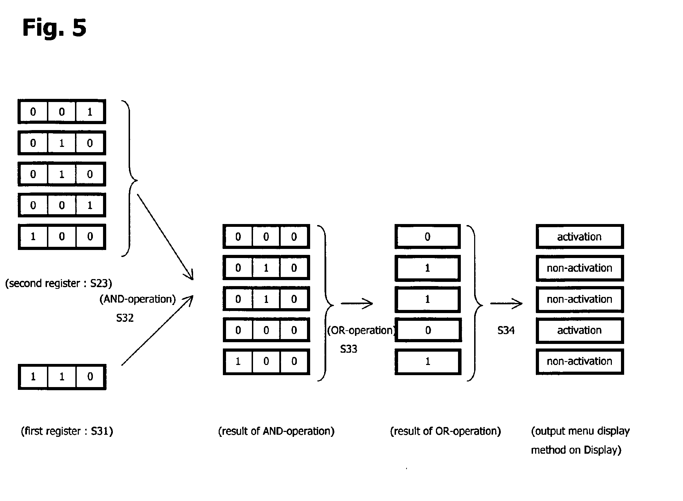

FIG. 5 illustrates this process in greater detail. In more detail, as shown in FIG. 5, the second register including the bit pattern '100' corresponding to the incoming bell sound setting menu is AND-ed with the bit pattern '110' of the first register. The result is the bit pattern '110' as shown in FIG. 5. FIG. 5 also illustrates AND-ing the other registers in FIG. 3 with the first register in FIG. 2. Thus, because the result of the AND-ing operation is the bit pattern '100,' the mobile terminal determines the selected silent mode menu is relevant to the current state of the mobile terminal.

Further, each bit of the result value '100' is again OR-operated (S33). That is, the following operation is performed: (1 +0)+0, which results in the value of '1.' Therefore, the OR-ing process in step S33 is used to determine in step S34 whether or not a user-selected menu should be executed. Thus, because the OR-operated result value is '1,' in this example, the mobile terminal determines the user-selected menu (i.e., the incoming bell sound menu) is contrary to the silent mode of the mobile terminal, and thus does not execute or display the selected menu and also issues an alert message to the user (S41).

However, as shown in FIG. 5, when the first register includes the bit pattern '110' corresponding to the current state of the terminal, and the user selects the camera photo storage or phone number storage menu options having a bit pattern '001' in the corresponding second register, the resultant value of the AND-ing and OR-ing operations is a '0,' as shown in FIG. 5. That is, because the selected camera photo storage or phone number storage menu is relevant only to the current state of the memory, which is indicated as not being full, the selected menu is executed and output on the display of the terminal (S42). FIG. 5 also illustrates the above AND-ing and OR-ing processes for each of the menu options in FIG. 3.

For example, the Internet connection and call connection menus each have an output definition value '010' indicating these menus are relevant to the no service area state in FIG. 2 (i.e., the middle bit corresponding to the no service area). Accordingly, similar to the above described operations, when the corresponding bit values are AND-ed and OR-ed, the resultant value is a '1' indicating the user-selected menu should not be activated (i.e., because the user of the mobile terminal is in a no service area). Similar comments apply to the other menu options.

The mobile terminal menu display method in accordance with the present invention may also be applied to any wireless communication device operating under any standard. In addition, as discussed above, a determination is first made as to whether or not a specific user-selected menu should be activated based on current state information of the mobile terminal. If it is determined the selected menu should not be activated, an alert message is sent to the user via an audible alarm, display alarm etc. thereby preventing the user from performing unnecessary menu operations.

Further, to implement the menu displaying method of the present, registers within a memory area are preferably used. In addition, a software program may be used to execute the menu displaying methods described above in concert with a microprocessor (MPU) that controls and operates the registers.

That is, this invention may be conveniently implemented using a conventional general purpose digital computer or microprocessor programmed according to the teachings of the present specification, as will be apparent to those skilled in the computer art. Appropriate software coding can readily be prepared by skilled programmers based on the teachings of the present disclosure, as will be apparent to those skilled in the software art. The invention may also be implemented by the preparation of application specific integrated circuits whereby interconnecting an appropriate network of conventional computer circuits, as will be readily apparent to those skilled in the art.

Any portion of the present invention implemented on a general purpose digital computer or microprocessor includes a computer program product which is a storage medium including instructions which can be used to program a computer to perform a process of the invention. The storage medium can include, but is not limited to, any type of disk including floppy disk, optical disk, CD-ROMs, and magneto-optical disks, ROMs, RAMs, EPROMs, EEPROMs, magnetic or optical cards, or any type of media suitable for storing electronic instructions.

Thus, the present invention can be embodied as software, hardware, or a combination of both. For example, the coding method of the mobile terminal in accordance with the present invention can be embodied as codes or commands in a software program that can be stored in a storage media (such as an internal memory of the mobile terminal, a flash memory, etc.) and that can be executed by a processor (such as a microprocessor MPU within the terminal).

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A menu display method for a mobile terminal comprising:
logically operating a value of a first register indicating a current state of the mobile terminal and a value of a second register indicating a relevancy of a menu option available on the mobile terminal to the current state of the mobile terminal; and
determining whether or not a selected menu is to be executed based on the logically operating step.

2. The method of claim 1, wherein the values of the first and second registers are bits, and each of the first and second registers have a same number of bits.

3. The method of claim 2, further comprising:
setting bits in the first register to have a '1' or '0' in correspondence with the current state of the mobile terminal.

4. The method of claim 1, wherein the second register includes a plurality of registers, each register corresponding to a different menu option available on the terminal.

5. The method of claim 2, wherein the logically operating step comprises:
reading the bit values of the first and second registers and performing Boolean arithmetic operations on the read bit values.

6. The method of claim 5, wherein the Boolean arithmetic operations include an AND-operation between corresponding bits value of the first and second registers.

7. The method of claim 6, wherein the Boolean arithmetic operations further include an OR-operation between each bit of a result value of the AND-operation.

8. The method of claim 7, wherein the determining step determines whether or not the selected menu option is to be activated based on a result value of the OR-operation.

9. The method of claim 8, wherein the result value of the OR-operation is one bit having a bit value of '1' or '0'.

10. The method of claim 9, wherein the bit value '1' indicates the selected menu option is not to be executed, and the bit value '0' indicates the selected menu option is to be executed, and vice-versa.

11. The method of claim 1, further comprising:
displaying at least one menu corresponding to the selected menu if the determining step determines the selected menu is to be executed based on the logically operating step, or not displaying the at least one menu corresponding to the selected menu if the determining step determines the selected menu is not to be executed based on the logically operating step.

12. The method of claim 1, further comprising:
issuing an alert message when the determining steps determines the selected menu is not to be executed based on the logically operating step.

13. A computer program product on at least one recording medium for executing the following computer instructions:
logically operating a value of a first register indicating a current state of the mobile terminal and a value of a second register indicating a relevancy of a menu option available on the mobile terminal to the current state of the mobile terminal; and
determining whether or not a selected menu is to be executed based on the logically operating instructions.

14. The computer program product of claim 13, wherein the second register includes a plurality of registers, each register corresponding to a different menu option available on the terminal.

15. The computer program product of claim 13, wherein the logically operating instruction comprises:
reading the bit values of the first and second registers and performing Boolean arithmetic operations on the read bit values.

16. The computer program product of claim 13, wherein the computer program product further executes the following computer instruction:
displaying at least one menu corresponding to the selected menu if the determining instruction determines the selected menu is to be executed based on the logically operating instruction, or not displaying the at least one menu corresponding to the selected menu if the determining instruction determines the selected menu is not to be activated based on the logically operating instruction.

17. The computer program product of claim 13, wherein the computer program product further executes the following computer instruction:
issuing an alert message to when the determining instruction determines the selected menu is not to be executed based on the logically operating step.

18. A menu display method for a mobile terminal, comprising:
determining whether a selected menu is to be activated or not-activated based on current state information of the mobile terminal; and
issuing an alert message and not activating the selected menu if the determining step determines the selected menu is not to be activated.

19. The method of claim 18, wherein the determining step comprises:
logically operating a value of a first register indicating a current state of the mobile terminal included in the current state information, and a value of a second register indicating a relevancy of a menu option available on the mobile terminal to the current state of the mobile terminal.

20. The method of claim 19, wherein the determining step determines whether or not a selected menu is to be activated based on the logically operating step.

21. The method of claim 19, wherein the second register includes a plurality of registers, each register corresponding to a different menu option available on the terminal.

22. The method of claim 19, wherein the logically operating step comprises:
reading bit values of the first and second registers and performing Boolean arithmetic operations on the read bit values.

23. The method of claim 22, wherein the Boolean arithmetic operations include an AND-operation between corresponding bits value of the first and second registers.

24. The method of claim 23, wherein the Boolean arithmetic operations further include an OR-operation between each bit of a result value of the AND-operation.

25. The method of claim 24, wherein the determining step determines whether or not the selected menu option is to be activated based on a result value of the OR-operation.

26. The method of claim 25, wherein the result value of the OR-operation is one bit having a bit value of '1' or '0'.

27. The method of claim 26, wherein the bit value '1' indicates the selected menu option is not to be activated, and the bit value '0' indicates the selected menu option is to be activated, and vice-versa.

28. The method of claim 19, further comprising:
displaying at least one menu corresponding to the selected menu if the determining step determines the selected menu is to be activated based on the logically operating step, or not displaying the at least one menu corresponding to the selected menu if the determining step determines the selected menu is not to be activated based on the logically operating step.
